(19) Europäisches Patentamt
European Patent Office
Office européen des brevets

(11) **EP 4 485 022 A1**

(12) **EUROPEAN PATENT APPLICATION**

(43) Date of publication:
**01.01.2025 Bulletin 2025/01**

(21) Application number: **24183565.1**

(22) Date of filing: **20.06.2024**

(51) International Patent Classification (IPC):
**G02B 6/036** (2006.01)

(52) Cooperative Patent Classification (CPC):
**G02B 6/03672; G02B 6/03644**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.06.2023 IN 202311043986**

(71) Applicant: **Sterlite Technologies Limited
Gurugram, Haryana 122102 (IN)**

(72) Inventors:
• **MALVIYA, Apeksha
122102 Gurugram (IN)**

• **MUNIGE, Srinivas Reddy
122102 Gurugram (IN)**
• **GUPTA, Priya
122102 Gurugram (IN)**
• **KAPOOR, Saurabh
122102 Gurugram (IN)**
• **PANDEY, Anand
122102 Gurugram (IN)**

(74) Representative: **Valet Patent Services Limited
c/o Caya 83713X
Am Börstig 5
96052 Bamberg (DE)**

(54) **OPTICAL FIBER CABLE AND OPTICAL FIBER WITH REDUCED DIAMETER**

(57)     The present disclosure relates to an optical fiber (100) having a core (102) extending along a central axis (101) and a cladding (104 surrounding the core (102). In particular, the cladding (104) includes a peripheral cladding layer (104d) defined by predefined peripheral thickness, and a fifth refractive index (n5). The fifth refractive index (n5) is less than a refractive index of pure silica. Further, the optical fiber (100) has leakage loss of less than or equal to 0.003 decibel per kilometer (dB/Km) at a wavelength 1550 nano meter (nm).

FIG. 2A

EP 4 485 022 A1

## Description

### TECHNICAL FIELD

Embodiments of the present disclosure relate to the field of telecommunication fiber, and more particularly, relates to an optical fiber cable and an optical fiber with reduced diameter.

This application claims the benefit of Indian Application No. "202311043986" titled "OPTICAL FIBER CABLE AND OPTICAL FIBER WITH REDUCED DIAMETER" filed by the applicant on June 30, 2023, which is incorporated herein by reference in its entirety.

### Background Art

Optical fibers are widely used to transmit information or data in the form of light from one place to another. The optical fibers are disposed within the optical fiber cable. Fiber optic cables include one or more optical fibers or other optical waveguides that conduct optical signals, for example carrying voice, data, video, or other information

Increasing demand of high-speed optical fiber communication has subsequently increased the density of optical fiber networks, which has led to a larger problem of accommodation of the optical fiber cables. Attenuation of optical signals and micro-bending losses in the optical fibers have a huge impact on the range and quality of optical signals communicated in the network.

Low attenuation (e.g., a fiber having an attenuation value of $^\wedge 0.17$ dB/km) is an important characteristic of optical fibers configured to efficiently transmit data. Fiber nonlinearity is also a factor limiting the performance of optical fibers used in high speed, long haul transmission applications. In general, fiber nonlinearity can be reduced by increasing the effective area of the fiber. This is because power density is inversely proportional to the effective area. While some fiber designs configured for single mode operation have focused on increasing the effective area, the effective area achieved by these designs has been limited by micro- and macro-bending losses.

With recent advances in digital signal processing (DSP), linear impairment to transmission systems (e.g., chromatic dispersion and polarization mode dispersion (PMD)), is not a significant problem. Yet even with the advancements in DSP, the modal dispersion levels still should be minimized. Multiple mechanisms can contribute to the attenuation and loss characteristics in optical fibers. These mechanisms can include Rayleigh scattering, small-angle scattering, metals and impurity-related absorption effects, and other UV and IR-related effects. Density and concentration fluctuations in the fibers can contribute to Rayleigh scattering. It is generally understood that the composition of the fiber regions (e.g., core and cladding), and their respective processing conditions, may influence these mechanisms.

Prior art reference "US9802858B2" discloses an optical fiber with a core and a cladding such that the core is co-doped with Fluorine and Chlorine. The cladding of the optical fiber has three cladding layers such that each layer contains silicon dioxide ($SiO_2$) doped with Fluorine and other dopants such as Chlorine and Bromine. The cladding comprises a trench.

Another prior art reference "US8472770B2" discloses an optical fiber comprising a core and a cladding such that the cladding includes an inner trench and an outer trench. The outermost layer of the optical fiber is un-doped. The trenches formed in the known optical fiber in the prior art are not at the outer region of the optical fiber.

Existing solutions, such as those disclosed in US9802858B2 and US8472770B2, have limitations. These solutions involve complex structures with co-doping, multiple cladding layers, and inner trenches, making them challenging to manufacture. Moreover, the disclosed multicore optical fibers focus on inter-core crosstalk, neglecting issues pertinent to single-mode fibers like leakage losses and overall diameter reduction.

In multicore optical fiber, an outer trench is known in the prior art which primarily focuses on improving inter core cross talk specifically in a case of reduced diameter multicore optical fiber where the glass diameter of the optical fiber is significantly low. The design parameters for multicore optical fibers include pitch, outer clad thickness (OCT), and refractive index (RI) structures of the core. The OCT represents the minimum distance between a center of the outer cores and the interface between the cladding and the coating. To compensate for the low OCT resulting from an increase in pitch (which is necessary to reduce crosstalk) and reduction in the glass diameter, the outer cladding layer is optimized. The overall design is optimized to achieve improved crosstalk performance and bend characteristics. In single mode fiber, leakage loss is one of the important optical parameters that need to be controlled. If the leakage loss of the optical fiber is more, then the optical fiber exhibits more attenuation.

The increasing demand for high-speed optical fiber communication has led to a higher density of optical fiber networks, posing challenges in accommodating optical fiber cables. Attenuation of optical signals and micro-bending losses significantly impacts signal range and quality within the network.

There is a long-felt need for a single-mode optical fiber that is cost-effective, easy to manufacture, reduced in diameter, and simultaneously addresses increased glass strength, reduced leakage loss, and ultra-low bend losses, while optimizing mode field diameter (MFD) values.

Accordingly, to overcome the disadvantages of the prior art, there is an urgent need for a technical solution that overcomes the above-stated limitations in the prior arts by providing a single mode optical fiber that is inexpensive, easy to manufacture, reduced in diameter, has increased glass strength, reduced leakage loss and provides ultra-low bend losses as well as optimized mode field diameter (MFD) values.

## SUMMARY OF THE DISCLOSURE

Embodiments of the present disclosure relates to an optical fiber comprising a core extending along a central axis of the optical fiber and a cladding surrounding the core. In particular, the cladding further comprises a peripheral cladding layer defined by a predefined peripheral thickness and a fifth refractive index. Moreover, the fifth refractive index is less than a refractive index of pure silica. Further, leakage loss of the optical fiber is less than or equal to 0.003 decibel per kilometer (dB/Km) at a wavelength 1550 nano meter (nm).

According to the first aspect of the present disclosure, the predefined peripheral thickness of the peripheral cladding layer (104d) is at least 4 micrometers ($\mu$m).

According to the second aspect of the present disclosure, the peripheral cladding layer has a fifth relative refractive index ($\Delta 5$) such that the fifth relative refractive index ($\Delta 5$) at an outermost end of the peripheral cladding layer is less than or equal to a minimum value ($\Delta 5_{min}$) of the fifth relative refractive index ($\Delta 5$).

According to the third aspect of the present disclosure, the cladding further comprises an inner cladding having a third relative refractive index ($\Delta 3$) and a mid-cladding separating the inner cladding and the peripheral cladding layer. In particular, the third relative refractive index ($\Delta 3$) is less than a relative refractive index of pure silica.

According to the third aspect of the present disclosure, the cladding also comprises an intermediate cladding surrounding the core. In particular, the intermediate cladding is un-doped.

According to the fourth aspect of the present disclosure, a concentration profile of at least one down dopant is maximum between an outer boundary of the core and an outer boundary of the inner cladding.

According to the fifth aspect of the present disclosure, an absolute difference in the fifth relative refractive index ($\Delta 5$) and the relative refractive index of pure silica is less than or equal to 0.3%.

According to the sixth aspect of the present disclosure, the cladding comprises at least one region of a predefined thickness where relative refractive index is equal to the relative refractive index of pure silica.

According to the seventh aspect of the present disclosure, the optical fiber has

(i) a Mode Field Diameter (MFD) of the optical fiber is in a range of 8.2 micro meter ($\mu$m) to 9 $\mu$m at a wavelength of 1550 nm,
(ii) a cable cut-off wavelength of the optical fiber is less than or equal to 1260 nano meter (nm),
(iii) a Co-efficient of Thermal Expansion (CTE) of the optical fiber is in a range of $6 \times 10^{-7}$ to $1 \times 10^{-7}$ per Celsius ($C^{-1}$), and
(iv) an attenuation of the optical fiber is less than 0.35 decibel/kilometer (dB/KM) at a wavelength of 1310 nm and 0.25 dB/KM at the wavelength of 1550 nm.

According to the eighth aspect of the present disclosure, a macro-bend loss of the optical fiber is less than or equal to at least one of,

(i) 0.15 dB/turn at a bend radius of 5 milli meter (mm) and a wavelength of 1550 nm,
(ii) 0.45 dB/turn at a bend radius of 5 mm and a wavelength of 1625 nm,
(iii) 0.2 dB/turn at a bend radius of 7.5 mm and a wavelength of 1550 nm, and
(iv) 0.5 dB/turn at a bend radius of 7.5 mm and a wavelength of 1625 nm.

According to the ninth aspect of the present disclosure, the diameter of the optical fiber is less than 125 $\mu$m such that a maximum concentration of at least one down dopant in the peripheral cladding layer is less than or equal to 7 atomic percent (at %).

According to the tenth aspect of the present disclosure, the optical fiber is coated by a primary coating and a secondary coating such that a ratio of a thickness of the primary coating to a thickness of the secondary coating is greater than 0.14.

According to the eleventh aspect of the present disclosure, optical fiber is for use in an optical fiber cable. Further, the optical fiber is used for manufacturing an optical fiber ribbon with at least one pair of adjacent optical fibers fully bonded along the length and at least one pair of adjacent optical fibers is intermittently bonded along the length. Furthermore, an attenuation of the optical fiber cable is less than 0.4 dB/km at a wavelength of 1310 nm, and less than 0.25 dB/km at the wavelength of 1550 nm.

The foregoing objectives of the present disclosure are attained by providing an optical fiber cable and an optical fiber with reduced diameter.

## BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.

Fig. 1 is a pictorial snapshot illustrating an optical fiber in accordance with an embodiment of the present disclosure;

Fig. 2A is a pictorial snapshot illustrating a theoretical refractive index profile of the optical fiber in accordance with an embodiment of the present disclosure;

Fig. 2B is a pictorial snapshot illustrating an experimental refractive index profile of the optical fiber in accordance with an embodiment of the present disclosure;

Fig. 3 is a pictorial snapshot illustrating an optical fiber cable manufactured from the optical fiber in accordance with an embodiment of the present disclosure.

The optical fiber cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

## DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

**The following brief definition of terms shall apply throughout the present disclosure:**
The term "sheath" as used herein is referred to as an outermost layer or an outermost layer of the optical fiber cable that holds and protects the contents of the optical fiber cable.

The term "strength member" as used herein is referred to as a cable element made up of filaments or yarns that provides strength to the optical fiber cable.

The term "ribbon bundle" as used herein is referred to as a bundle of optical fiber ribbons.

The term "intermittently bonded fiber (IBR)" as used herein refers to an optical fiber ribbon having a plurality of optical fibers such that the plurality of optical fibers is intermittently bonded to each other by a plurality of bonded portions that are placed along the length of the plurality of optical fibers. The plurality of bonded portions is separated by a plurality of unbonded portions. An intermittently bonded ribbon fiber cable consists of fibers bonded using matrix material. As such, they lack a flat structure. The rollable ribbons in an intermittently bonded ribbon fiber are bundled together and have the appearance of a spider's web. Hence, they are also called spider web ribbon fiber. Due to their loose fiber bundling, intermittently bonded ribbon cables are perfect for making optic fiber cables with higher packing density.

The term "core" as used herein refers to an inner most cylindrical structure present in the center of the optical fiber, that is configured to guide the light rays inside the optical fiber.

The term "cladding" as used herein refers to one or more layered structure covering the core of an optical fiber from the outside, that is configured to possess a lower refractive index than the refractive index of the core to facilitate total internal reflection of light rays inside the optical fiber. Further, the cladding of the optical fiber may include an inner cladding layer coupled to the outer surface of the core of the optical fiber and an outer cladding layer coupled to the inner cladding from the outside.

The term "trench" as used herein is referred to as a down-doped region with a higher down dopant concentration to decrease the refractive index of the down doped region with respect to pure silica and increase the relative refractive index of the core with respect to the down-doped region.

The term "refractive index" as used herein is referred to as the measure of change of speed of light from one medium to another and is particularly measured in reference to speed of light in vacuum. More specifically, the refractive index facilitates measurement of bending of light from one medium to another medium.

The term "relative refractive index" as used herein is referred to as a measure of the relative difference in refractive index between two optical materials.

As used herein, the relative refractive index is represented by $\Delta$ and its values are given in units of "%", unless otherwise specified. In some cases where the refractive index of a region is less than the average refractive index of an undoped region, the relative refractive index percentage is negative, and the region is referred as a trench region.

The term "reduced diameter optical fiber" as used herein is referred to as an optical fiber as disclosed in the present disclosure having a diameter range of 60 micrometers ($\mu$m) to 125 $\mu$m with a tolerance of + 0.7 $\mu$m. Such optical fibers have very less peripheral clad thickness. The reduced diameter optical fiber significantly increases the packing density of the optical fiber cables.

The term "refractive index profile" (also termed as relative refractive index profile $\Delta(r)$) of the optical fiber as used herein is referred to as a distribution of refractive indexes in the optical fiber from the core to the outmost cladding layer of the optical fiber. Based on the refractive index profile, the optical fiber may be configured as a step index fiber. The refractive index of the core of the optical fiber is constant throughout the fiber and is higher than the refractive index of the cladding. Further, the optical fiber may be configured as a graded index fiber, wherein the refractive index of the core gradually varies as a function of the radial distance from the center of the core.

The term "down doped" as used herein is referred to as addition of doping materials to facilitate decrease in the refractive index of a particular layer or part of optical fiber. The materials configured to facilitate down-doping are known as down-dopants. Specifically, at least one down dopant as used herein is Fluorine (F).

The term "up doped" as used herein is referred to as addition of doping materials to facilitate increase in the refractive index of a particular layer or part of optical fiber. The materials configured to facilitate up-doping are known as up-dopants. Specifically, the up dopant as used herein is one of Germanium and Chlorine.

The term "un doped" as used herein is referred to as a material that is not intentionally doped, or which is pure silica. However, there are always chances of some diffusion of dopants in the region which is negligible.

The term "diameter of the optical fiber" as used herein is referred to as a diameter of a bare glass optical fiber excluding one or more coatings on the optical fiber.

The term "Mode Field Diameter (MFD)" as used herein is referred to as the size of the light-carrying portion of the optical fiber. For single-mode optical fibers, this region includes the optical fiber core as well as a small portion of the surrounding cladding glass of the optical fiber. The selection of desired MFD helps to describe the size of the light-carrying portion of the optical fiber.

The term "bare optical fiber" as used herein is referred to as the uncoated fiber drawn by melting a cylindrical glass preform in a draw tower. Further, the bare optical fiber is coated with one or more coatings.

The term "peripheral cladding layer" as used herein is referred to as the outermost cladding region of the optical fiber. In a reduced diameter fiber, the thickness of the peripheral cladding layer is less so it is down doped with Fluorine till the end of the glass region of the optical fiber to significantly improve leakage loss and micro bending loss. Further the down doping of the peripheral cladding layer helps in increasing the mechanical strength of the optical fiber.

The term "leakage loss" as used herein is referred to as loss due to mode leak in an optical fiber that adds to an attenuation of the optical fiber. The leakage loss is calculated using finite element analysis method where the losses are calculated in the fiber in straight condition.

The term "micro bend loss" as used herein is referred to as a loss in an optical fiber that relates to a light signal loss associated with lateral stresses along a length of the optical fiber. The micro bend loss is due to coupling from the optical fiber's guided fundamental mode to lossy modes or cladding modes.

The term "Zero Dispersion Wavelength (ZDW)" as used herein is referred to as a wavelength at which the value of a dispersion coefficient is zero. In general, ZDW is the wavelength at which material dispersion and waveguide dispersion cancel one another.

The term "attenuation" as used herein is referred to as reduction in power of a light signal as it is transmitted. Specifically, the attenuation is caused Rayleigh scattering, absorption of the light signal, and the like.

The term "cable cut-off wavelength" as used herein refers to a wavelength above which a single-mode fiber will support and propagate only one mode of light. The optical fiber transmits a single mode of optical signal above a pre-defined cut-off wavelength known as cable cut-off wavelength.

The term "core peak" as used herein is referred to as the maximum relative refractive index value of the core of the optical fiber.

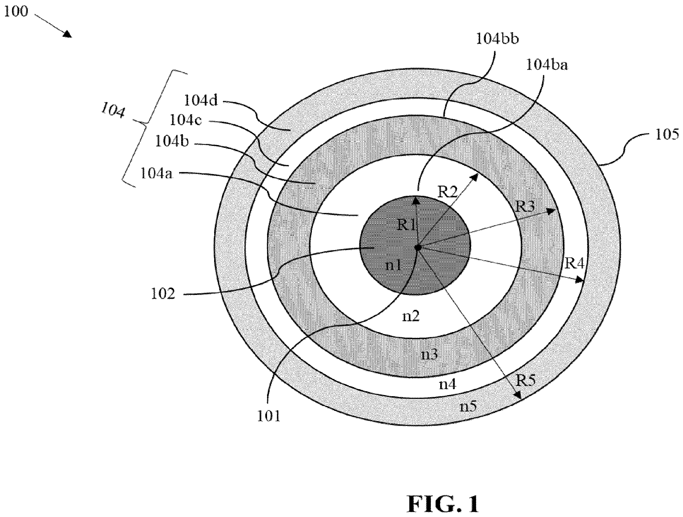

Fig. 1 is a pictorial snapshot illustrating an optical fiber in accordance with an embodiment of the present disclosure. The optical fiber 100 may have a leakage loss less than or equal to 0.003 decibel per kilometer (dB/Km) at a wavelength 1550 nanometer (nm). Further, the optical fiber 100 may have a Mode Field Diameter (MFD) in a range of 8.2 micrometer ($\mu$m) to 9 $\mu$m at a wavelength of 1550 nm. Furthermore, the optical fiber 100 may have a cable cut-off wavelength less than or equal to 1260 nm.

In accordance with an embodiment of the present disclosure, the optical fiber 100 may have a Coefficient of Thermal Expansion (CTE) in a range of 6 x $10^{-7}$ to 1 x $10^{-7}$ per Celsius ($C^{-1}$).

In accordance with an embodiment of the present disclosure, the optical fiber 100 may have an attenuation less than 0.35 decibel/kilometer (dB/KM) at a wavelength of 1310 nm and 0.25 dB/KM at the wavelength of 1550 nm.

In accordance with an embodiment of the present disclosure,the macro bend loss of the optical fiber 100 may be less than or equal to at least one of, 0.15 dB/turn at a bend radius of 5 milli meter (mm) and a wavelength of 1550 nm, 0.45 dB/turn at a bend radius of 5 mm and a wavelength of 1625 nm, 0.08 dB/turn at a bend radius of 7.5 mm and a wavelength of 1550 nm, and 0.25 dB/turn at a bend radius of 7.5 mm and a wavelength of 1625 nm.

In accordance with an embodiment of the present disclosure, a glass diameter of the optical fiber 100 may be in a range of 60 $\mu$m to 100 $\mu$m with a tolerance of $\pm$ 0.7 $\mu$m. Alternatively, the glass diameter of the optical fiber 100 may be less than 125 $\mu$m with a tolerance of $\pm$ 0.7 $\mu$m.

In accordance with an embodiment of the present disclosure, the optical fiber 100 may be coated with a primary coating (not shown) and a secondary coating (not shown) such that a ratio of a thickness of the primary coating to a thickness of the secondary coating may be greater than 0.14. In some alternative embodiment of the present disclosure, the optical fiber 100 may be coated with the primary coating layer and the secondary coating layer such that the secondary layer may be colored. Further, young's modulus of the primary coating may be less than 0.6 Mega Pascal (MPa) and the secondary coating may be less than 1500 MPa.

In accordance with an embodiment of the present disclosure, the optical fiber 100 may be coated with at least one layer of coating. In particular, at least one layer of coating may have a thickness of less than or equal to 65 $\mu$m.

In accordance with an embodiment of the present disclosure, the optical fiber 100 may be coated with the primary coating layer, the secondary coating layer, and the colored coating layer. Further, coating thickness of the primary coating layer may be in a range of 10 $\mu$m to 30 $\mu$m. The coating thickness of the secondary layer may be in a range of 10 $\mu$m to 30 $\mu$m. And, the coating thickness of the colored coating layer may be in a range of 4 $\mu$m to 8 $\mu$m.

In accordance with an embodiment of the present disclosure, the optical fiber 100 may be coated with a single coating layer to provide tensile strength, rigidity, and enough cushion to the optical fiber 100. Due to the single coating layer, a diameter of the optical fiber 100 with coating may be less than or equal to 140 $\mu$m.

In accordance with an embodiment of the present disclosure, diameter of the optical fiber 100 may be coated by at least one coating layer may be in a range of 125 $\mu$m to 180 $\mu$m. Alternatively, the diameter of the optical fiber 100 may be coated by at least one coating layer may be in a range of 160 $\mu$m to 200 $\mu$m. Further in alternative embodiments, the diameter of the optical fiber 100 may be coated by at least one coating layer may be less than 250 $\mu$m.

In accordance with an embodiment of the present disclosure, the optical fiber 100 may have a core 102 extending along a central axis 101 of the optical fiber 100, and a cladding 104 surrounding the core 102. The core 102 may be doped with but not limited to Germanium (Ge) or Chlorine (Cl), and other up dopants.

In accordance with an embodiment of the present disclosure, the cladding may have a peripheral cladding layer 104d defined by a predefined peripheral thickness, and a fifth refractive index 'n5' (i.e., a peripheral refractive index). The fifth refractive index 'n5' may be less than a refractive index of pure silica. The peripheral cladding layer 104d may have a peripheral thickness such that the predefined peripheral thickness of the peripheral cladding layer 104d may be at least 4 micrometers ($\mu$m). Moreover, a maximum concentration of at least one down dopant in the peripheral cladding layer 104d may be less than or equal to 7 atomic percent (at %). Further, the minimum required numerical value of the predefined peripheral thickness is 4 $\mu$m to achieve the required strength, leakage loss, and other optical parameters in the optical fiber 100 as described in the different embodiments of the present disclosure.

In accordance with an embodiment of the present disclosure, the cladding 104 may further have an inner cladding 104b and a mid-cladding 104c. In particular, the inner cladding 104b and may have a third refractive index 'n3'. The third refractive index 'n3' may be less than the refractive index of pure silica. Moreover, the inner cladding 104b may be down doped with one or more down dopants. Further, the mid-cladding 104c may separate the inner cladding 104b and the peripheral cladding layer 104d. The mid-cladding 104c may have a fourth refractive index 'n4' that may be equal to the refractive index of pure silica. The pure silica mid-cladding 104c acts as a buffer region and these are required to optimize the MFD value in the required range as claimed in the present disclosure. The inner cladding 104b is important to achieve improved macro bend, MFD, leakage loss and other optical parameters.

In accordance with an embodiment of the present disclosure, the concentration profile of at least one down dopant is maximum between an outer boundary 104ba of the core 102 and an outer boundary 104bb of the inner cladding 104b. Alternatively, the outer boundary 104ba of the core 102 and the outer boundary 104bb of the inner cladding 104b may be identified by first order differentiation of relative refractive index with respect to radial parameters. Alternatively, the outer boundary 104ba of the core 102 and the outer boundary 104bb of the inner cladding 104b may be identified by a change in slope in the refractive index profile 202b.

In accordance with an embodiment of the present disclosure,, the cladding 104 may further have an intermediate cladding 104a surrounding the core 102. Particularly, the intermediate cladding 104a may be undoped. In some aspects of the present disclosure, the radial thickness of the intermediate cladding 104a is zero.

In accordance with an embodiment of the present disclosure, the cladding 104 may have at least one region having a relative refractive index less than the relative refractive index of pure silica. Further, the cladding 104 may have at least one region of a predefined thickness having a relative refractive index equal to the relative refractive index of pure silica. The predefined thickness may be defined as an absolute difference between the radii of the two adjacent cladding regions.

In accordance with an embodiment of the present disclosure, the core 102 may extend from a first radial distance R1 to the central axis 101, and the cladding 104 may extend from a fifth radial distance R5 to the first radial distance R1, from the central axis 101. Alternatively, the intermediate cladding 104a may extend from a second radial distance R2 to the first radial distance R1, from the central axis 101. The inner cladding 104b may extend from a third radial distance R3 to the second radial distance R2, from the central axis 101. The mid-cladding 104c may extend from a fourth radial distance R4 to the third radial distance R3, from the central axis 101. The peripheral cladding layer 104d may extend from the fifth radial distance R5 to the fourth radial distance R4, from the central axis 101.

In accordance with an embodiment of the present disclosure, the first radial distance R1 may be in a range of 3.5 $\mu$m to 5 $\mu$m. The difference in the second radial distance R2 and the first radial distance R1 (i.e., R2-R1) may be in a range of 0 $\mu$m to 8.5 $\mu$m. The third radial distance R3 may be in a range of 10 $\mu$m to 20 $\mu$m, the fourth radial distance R4 may be in a range of 20 $\mu$m to 60 $\mu$m. The fifth radial distance R5 may be in a range of 30 $\mu$m to 62.5 $\mu$m, with a tolerance of 0.35 $\mu$m. In some aspects of the present disclosure, the difference of second radial distance R2 and first radial distance R1 may be equal to 0 $\mu$m which defines that the optical fiber 100 is independent of any intermediate cladding 104a. In other words, the optical fiber 100 may be free from any buffer region or pure silica region or un doped region immediately adjacent to the core 102.

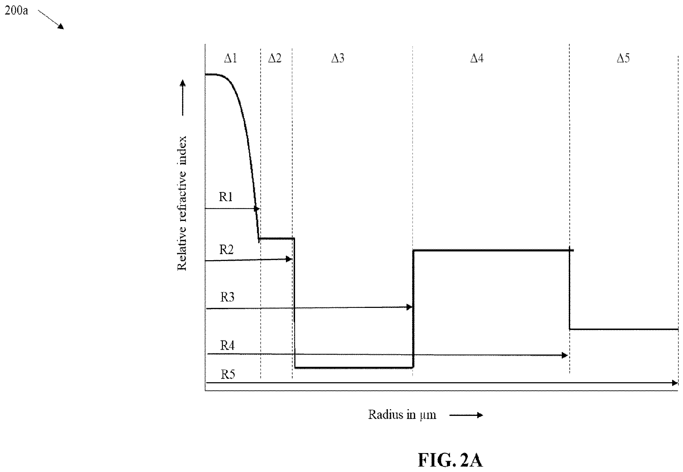

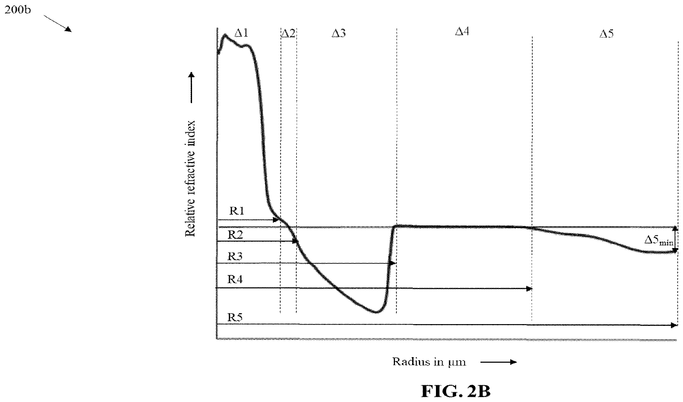

Fig. 2A and Fig. 2B are pictorial snapshots illustrating a theoretical refractive index profile and experimental refractive index profile of the optical fiber in accordance with one or more embodiments of the present disclosure. The optical fiber 100 may have the core 102 and the cladding 104. In particular, the cladding 104 may have the intermediate cladding 104a, the inner cladding 104b, the mid-cladding 104c, and the peripheral cladding layer 104d. Moreover, the core 102 may have a first relative refractive index '$\Delta 1$' in a range of 0.35 to 0.45. Further, the relative refractive index profile of the core 102 may have an alpha profile such that a first refractive index (i.e., core refractive index) 'n1' may be derived from a peak shaping parameter 'a'. The peak shaping parameter 'a' is defined as how the refractive index changes as a function of radius and may be in a range of 3 to 9.

The core refractive index 'n1' may further be dependent on a core peak with a maximum refractive index value 'n1$_{max}$' (i.e., a maximum value of the core refractive index 'n1'), the core radius 'R1', the first relative refractive index difference '$\Delta 1$', and a radial position 'r' from a center of the optical fiber 100. In an exemplary aspect of the present disclosure, the core refractive index 'n1' at the radial distance 'r' can be determined as:

$$n1(r) = n1_{max}\left(1 - 2\Delta 1\left(\frac{r}{R1}\right)^{\alpha 1}\right)^{\frac{1}{2}}.$$

In accordance with an embodiment of the present disclosure, the intermediate cladding 104a may have a second relative refractive index '$\Delta 2$' in a range of -0.05 to 0.05. The inner cladding 104b may have a third relative refractive index '$\Delta 3$' less than a relative refractive index of pure silica. In some alternative aspects of the present disclosure, the numerical value of the third relative refractive index '$\Delta 3$' may be in a range of -0.2 to -0.45.

In accordance with an embodiment of the present disclosure, the mid-cladding 104c may have a fourth relative refractive index '$\Delta 4$' may be in a range of -0.05 to 0.05. The peripheral cladding layer 104d may have a fifth relative refractive index '$\Delta 5$' in a range of -0.05 to -0.35. In some aspects of the present disclosure, a numerical value of the fifth relative refractive index '$\Delta 5$' at an outermost end 105 (as shown earlier in FIG. 1) of the peripheral cladding layer 104d may be less than or equal to a minimum value '$\Delta 5_{min}$' of the fifth relative refractive index '$\Delta 5$'.

In an exemplary aspect of the present disclosure the minimum value '$\Delta 5_{min}$' may be equal to -0.35. In some aspects of the present disclosure, an absolute difference in the fifth relative refractive index '$\Delta 5$' and the relative refractive index of pure silica may be less than or equal to 0.3%.

In accordance with one embodiment of the present disclosure, the optical fiber 100 may have the MFD of 8.5 $\mu$m. The cable cut-off wavelength may be equal to 1210 nm. A zero-dispersion wavelength (ZDW) may be less than or equal to 1316 nm. The macro bend loss may be at least one of, 0.1 dB/turn at the bend radius of 5 milli meter (mm) and the wavelength of 1550 nm, 0.3 dB/turn at the bend radius of 5 mm and the wavelength of 1625 nm, 0.04 dB/turn at the bend radius of 7.5 mm and the wavelength of 1550 nm, and 0.11 dB/turn at the bend radius of 7.5 mm and the wavelength of 1625 nm. The optical fiber 100 may have a leakage loss of 0.0004 dB/Km at the wavelength of 1550 nm when the glass diameter of the optical fiber 100 is equal to 60 $\mu$m. The first relative refractive index '$\Delta 1$' may be equal to 0.41, the first radial distance 'R1' may be equal to 3.82 $\mu$m, the peak shaping parameter" may be equal to 4, the second relative refractive index '$\Delta 2$' may be equal to 0, the difference between the second radial distance and the first radial distance (R2-R1) may be equal to 4.3 $\mu$m,

the third relative refractive index '∆3' may be equal to -0.32, the third radial distance R3 may be equal to 15 µm, the fourth relative refractive index '∆4' may be equal to 0, the fourth radial distance R4 may be equal to 25 µm, the fifth relative refractive index '∆5' may be equal to -0.2, the fifth radial distance R5 may be equal to 30 µm.

In accordance with another embodiment of the present disclosure, the optical fiber 100 may have the MFD of 8.5 µm. The cable cut-off wavelength may be equal to 1210 nm. The zero-dispersion wavelength (ZDW) may be less than or equal to 1316 nm. The macro bend loss may be at least one of, 0.1 dB/turn at the bend radius of 5 milli meter (mm) and the wavelength of 1550 nm, 0.3 dB/turn at the bend radius of 5 mm and the wavelength of 1625 nm, 0.04 dB/turn at the bend radius of 7.5 mm and the wavelength of 1550 nm, and 0.11 dB/turn at the bend radius of 7.5 mm and the wavelength of 1625 nm. The optical fiber 100 may have a leakage loss of 0.0003 dB/Km at the wavelength of 1550 nm when the glass diameter of the optical fiber is equal to 80 µm. The first relative refractive index '∆1' may be equal to 0.41, the first radial distance 'R1' may be equal to 3.82 µm, the peak shaping parameter" may be equal to 4, the second relative refractive index '∆2' may be equal to 0, the difference between the second radial distance and the first radial distance (R2-R1) may be equal to 4.3 µm, the third relative refractive index '∆3' may be equal to -0.32, the third radial distance R3 may be equal to 15 µm, the fourth relative refractive index '∆4' may be equal to 0, the fourth radial distance R4 may be equal to 35 µm, the fifth relative refractive index '∆5' may be equal to -0.2, the fifth radial distance R5 may be equal to 40 µm.

In accordance with yet another embodiment of the present disclosure, the optical fiber 100 may have the MFD of 8.5 µm. The cable cut-off wavelength may be equal to 1210 nm. The zero-dispersion wavelength (ZDW) may be less than or equal to 1316 nm. The macro bend loss may be at least one of, 0.1 dB/turn at the bend radius of 5 milli meter (mm) and the wavelength of 1550 nm, 0.3 dB/turn at the bend radius of 5 mm and the wavelength of 1625 nm, 0.04 dB/turn at the bend radius of 7.5 mm and the wavelength of 1550 nm, and 0.11 dB/turn at the bend radius of 7.5 mm and the wavelength of 1625 nm. The optical fiber 100 may have a leakage loss of 0.0001 dB/Km at the wavelength of 1550 nm when the glass diameter of the optical fiber 100 is equal to 100 µm. The first relative refractive index '∆1' may be equal to 0.41, the first radial distance 'R1' may be equal to 3.82 µm, the peak shaping parameter" may be equal to 4, the second relative refractive index '∆2' may be equal to 0, the difference between the second radial distance and the first radial distance (R2-R1) may be equal to 4.3 µm, the third relative refractive index '∆3' may be equal to -0.32, the third radial distance R3 may be equal to 15 µm, the fourth relative refractive index '∆4' may be equal to 0, the fourth radial distance R4 may be equal to 45 µm, the fifth relative refractive index '∆5' may be equal to -0.2, the fifth radial distance R5 may be equal to 50 µm.

In accordance with yet another embodiment of the present disclosure, the optical fiber 100 may have the MFD of 8.5 µm. The cable cut-off wavelength may be equal to 1210 nm. The zero-dispersion wavelength (ZDW) may be less than or equal to 1316 nm. The macro bend loss may be at least one of, 0.1 dB/turn at the bend radius of 5 milli meter (mm) and the wavelength of 1550 nm, 0.3 dB/turn at the bend radius of 5 mm and the wavelength of 1625 nm, 0.04 dB/turn at the bend radius of 7.5 mm and the wavelength of 1550 nm. The optical fiber 100 may have a leakage loss of 0.000008 dB/Km at the wavelength of 1550 nm when the diameter of the optical fiber 100 is equal to 125 µm. The first relative refractive index '∆1' may be equal to 0.41, the first radial distance 'R1' may be equal to 3.82 µm, the peak shaping parameter" may be equal to 4, the second relative refractive index '∆2' may be equal to 0, the difference between the second radial distance and the first radial distance (R2-R1) may be equal to 4.3 µm, the third relative refractive index '∆3' may be equal to -0.32, the third radial distance R3 may be equal to 15 µm, the fourth relative refractive index '∆4' may be equal to 0, the fourth radial distance R4 may be equal to 55 µm, the fifth relative refractive index '∆5' may be equal to -0.2, the fifth radial distance R5 may be equal to 62.5 µm.

In accordance with yet another embodiment of the present disclosure, the optical fiber 100 may have the MFD of 8.8 µm. The cable cut-off wavelength may be equal to 1240 nm. The zero-dispersion wavelength (ZDW) may be less than or equal to 1312 nm. The macro bend loss may be at least one of, 0.12 dB/turn at the bend radius of 5 milli meter (mm) and the wavelength of 1550 nm, 0.34 dB/turn at the bend radius of 5 mm and the wavelength of 1625 nm, 0.08 dB/turn at the bend radius of 7.5 mm and the wavelength of 1550 nm, and 0.24 dB/turn at the bend radius of 7.5 mm and the wavelength of 1625 nm. The optical fiber 100 may have a leakage loss of 0.00062 dB/Km at the wavelength of 1550 nm when the diameter of the optical fiber 100 is equal to 60 µm. The first relative refractive index '∆1' may be equal to 0.38, the first radial distance 'R1' may be equal to 4 µm, the peak shaping parameter" may be equal to 5, the second relative refractive index '∆2' may be equal to 0, the difference between the second radial distance and the first radial distance (R2-R1) may be equal to 0 µm, the third relative refractive index '∆3' may be equal to -0.2, the third radial distance R3 may be equal to 12 µm, the fourth relative refractive index '∆4' may be equal to 0, the fourth radial distance R4 may be equal to 23 µm, the fifth relative refractive index '∆5' may be equal to -0.1, the fifth radial distance R5 may be equal to 30 µm.

In accordance with yet another embodiment of the present disclosure, the optical fiber 100 may have the MFD of 8.8 µm. The cable cut-off wavelength may be to 1240 nm. The zero-dispersion wavelength (ZDW) may be less than or equal to 1312 nm. The macro bend loss may be at least one of, 0.12 dB/turn at the bend radius of 5 millimeter (mm) and the wavelength of 1550 nm, 0.34 dB/turn at the bend radius of 5 mm and the wavelength of 1625 nm, 0.08 dB/turn at the bend radius of 7.5 mm and the wavelength of 1550 nm, and 0.24 dB/turn at the bend radius of 7.5 mm and the wavelength of 1625 nm. The optical fiber 100 may have a leakage loss of 0.0004 dB/Km at the wavelength of 1550 nm when the diameter of the optical fiber is equal to 80 $\mu$m. The first relative refractive index '$\Delta$1' may be equal to 0.38, the first radial distance 'R1' may be equal to 4 $\mu$m, the peak shaping parameter" may be equal to 5, the second relative refractive index '$\Delta$2' may be equal to 0, the difference between the second radial distance and the first radial distance (R2-R1) may be equal to 0 $\mu$m, the third relative refractive index '$\Delta$3' may be equal to -0.2, the third radial distance R3 may be equal to 12 $\mu$m, the fourth relative refractive index '$\Delta$4' may be equal to 0, the fourth radial distance R4 may be equal to 33 $\mu$m, the fifth relative refractive index '$\Delta$5' may be equal to -0.1, the fifth radial distance R5 may be equal to 40 $\mu$m.

In accordance with yet another embodiment of the present disclosure, the optical fiber 100 may have the MFD of 8.8 $\mu$m. The cable cut-off wavelength may be equal to 1240 nm. The zero-dispersion wavelength (ZDW) may be less than or equal to 1312 nm. The macro bend loss may be at least one of, 0.12 dB/turn at the bend radius of 5 milli meter (mm) and the wavelength of 1550 nm, 0.34 dB/turn at the bend radius of 5 mm and the wavelength of 1625 nm, 0.08 dB/turn at the bend radius of 7.5 mm and the wavelength of 1550 nm, and 0.24 dB/turn at the bend radius of 7.5 mm and the wavelength of 1625 nm. The optical fiber 100 may have a leakage loss of 0.00015 dB/Km at the wavelength of 1550 nm when the diameter of the optical fiber 100 is 100 $\mu$m. The first relative refractive index '$\Delta$1' may be equal to 0.38, the first radial distance 'R1' may be equal to 4 $\mu$m, the peak shaping parameter" may be equal to 5, the second relative refractive index '$\Delta$2' may be equal to 0, the difference between the second radial distance and the first radial distance (R2-R1) may be equal to 0 $\mu$m, the third relative refractive index '$\Delta$3' may be equal to -0.2, the third radial distance R3 may be equal to 12 $\mu$m, the fourth relative refractive index '$\Delta$4' may be equal to 0, the fourth radial distance R4 may be equal to 42 $\mu$m, the fifth relative refractive index '$\Delta$5' may be equal to -0.1, the fifth radial distance R5 may be equal to 50 $\mu$m.

In accordance with yet another embodiment of the present disclosure, the optical fiber 100 may have the MFD of 8.8 $\mu$m. The cable cut-off wavelength may be equal to 1240 nm. The zero-dispersion wavelength (ZDW) may be less than or equal to 1312 nm. The macro bend loss may be at least one of, 0.12 dB/turn at the bend radius of 5 milli meter (mm) and the wavelength of 1550 nm, 0.34 dB/turn at the bend radius of 5 mm and the wavelength of 1625 nm, 0.08 dB/turn at the bend radius of 7.5 mm and the wavelength of 1550 nm, and 0.24 dB/turn at the bend radius of 7.5 mm and the wavelength of 1625 nm. The optical fiber 100 may have a leakage loss of 0.000009 dB/Km at the wavelength of 1550 nm when the diameter of the optical fiber 100 is equal to 125 $\mu$m. The first relative refractive index '$\Delta$1' may be equal to 0.38, the first radial distance 'R1' may be equal to 4 $\mu$m, the peak shaping parameter " may be equal to 5, the second relative refractive index '$\Delta$2' may be equal to 0, the difference between the second radial distance and the first radial distance (R2-R1) may be equal to 0 $\mu$m, the third relative refractive index '$\Delta$3' may be equal to -0.2, the third radial distance R3 may be equal to 12 $\mu$m, the fourth relative refractive index '$\Delta$4' may be equal to 0, the fourth radial distance R4 may be equal to 54 $\mu$m, the fifth relative refractive index '$\Delta$5' may be equal to -0.1, the fifth radial distance R5 may be equal to 62.5 $\mu$m.

In accordance with yet another embodiment of the present disclosure, the optical fiber 100 may have the MFD of 8.35 $\mu$m. The cable cut-off wavelength may be equal to 1250 nm. The zero-dispersion wavelength (ZDW) may be less than or equal to 1317 nm. The macro bend loss may be at least one of, 0.08 dB/turn at the bend radius of 5 milli meter (mm) and the wavelength of 1550 nm, 0.22 dB/turn at the bend radius of 5 mm and the wavelength of 1625 nm, 0.02 dB/turn at the bend radius of 7.5 mm and the wavelength of 1550 nm, and 0.05 dB/turn at the bend radius of 7.5 mm and the wavelength of 1625 nm. The optical fiber 100 may have a leakage loss of 0.00038 dB/Km at the wavelength of 1550 nm when the diameter of the optical fiber 100 is equal to 60 $\mu$m. The first relative refractive index '$\Delta$1' may be equal to 0.42, the first radial distance 'R1' may be equal to 4 $\mu$m, the peak shaping parameter" may be equal to 3, the second relative refractive index '$\Delta$2' may be equal to 0, the difference between the second radial distance and the first radial distance (R2-R1) may be equal to 6 $\mu$m, the third relative refractive index '$\Delta$3' may be equal to -0.28, the third radial distance R3 may be equal to 18 $\mu$m, the fourth relative refractive index '$\Delta$4' may be equal to 0, the fourth radial distance R4 may be equal to 26 $\mu$m, the fifth relative refractive index '$\Delta$5' may be equal to -0.3, the fifth radial distance R5 may be equal to 30 $\mu$m.

In accordance with yet another embodiment of the present disclosure, the optical fiber 100 may have the MFD of 8.35 $\mu$m. The cable cut-off wavelength may be equal to 1250 nm. The zero-dispersion wavelength (ZDW) may be less than or equal to 1317 nm. The macro bend loss may be at least one of, 0.08 dB/turn at the bend radius of 5 milli meter (mm) and the wavelength of 1550 nm, 0.22 dB/turn at the bend radius of 5 mm and the wavelength of 1625 nm, 0.02 dB/turn at the bend radius of 7.5 mm and the wavelength of 1550 nm, and 0.05 dB/turn at the bend radius of 7.5 mm and the wavelength of 1625 nm. The optical fiber 100 may have a leakage loss of 0.00024 dB/Km at the wavelength of 1550 nm when the diameter of the optical fiber is equal to 80 $\mu$m. The first relative refractive index '$\Delta$1' may be equal to 0.42, the first radial distance 'R1' may be equal to 4 $\mu$m, the peak shaping parameter" may be equal to 3, the second relative refractive index '$\Delta$2' may be equal to 0, the difference between the second radial distance and the first radial distance (R2-R1) may be equal to 6 $\mu$m, the third relative refractive index '$\Delta$3' may be equal to -0.28, the third radial distance R3 may be equal to 18 $\mu$m, the fourth relative refractive index '$\Delta$4' may be equal to 0, the fourth radial distance R4 may be equal to 36 $\mu$m, the fifth relative refractive index '$\Delta$5' may be equal to -0.3, the fifth radial distance R5 may be equal to 40 $\mu$m.

In accordance with yet another embodiment of the present disclosure, the optical fiber 100 may have the MFD of 8.35 $\mu$m. The cable cut-off wavelength may be equal to 1250 nm. The zero-dispersion wavelength (ZDW) may be less than or equal to 1317 nm. The macro bend loss may be at least one of, 0.08 dB/turn at the bend radius of 5 milli meter (mm) and the wavelength of 1550 nm, 0.22 dB/turn at the bend radius of 5 mm and the wavelength of 1625 nm, 0.02 dB/turn at the bend radius of 7.5 mm and the wavelength of 1550 nm, and 0.05 dB/turn at the bend radius of 7.5 mm and the wavelength of 1625 nm. The optical fiber may have a leakage loss of 0.00008 dB/Km at the wavelength of 1550 nm when the diameter of the optical fiber 100 is equal to 100 $\mu$m. The first relative refractive index '$\Delta$1' may be equal to 0.42, the first radial distance 'R1' may be equal to 4 $\mu$m, the peak shaping parameter" may be equal to 3, the second relative refractive index '$\Delta$2' may be equal to 0, the difference between the second radial distance and the first radial distance (R2-R1) may be equal to 6 $\mu$m, the third relative refractive index '$\Delta$3' may be equal to -0.28, the third radial distance R3 may be equal to 18 $\mu$m, the fourth relative refractive index '$\Delta$4' may be equal to 0, the fourth radial distance R4 may be equal to 46 $\mu$m, the fifth relative refractive index '$\Delta$5' may be equal to -0.3, the fifth radial distance R5 may be equal to 50 $\mu$m.

In accordance with yet another embodiment of the present disclosure, the optical fiber 100 may have the MFD of 8.35 $\mu$m. The cable cut-off wavelength may be equal to 1250 nm. The zero-dispersion wavelength (ZDW) may be less than or equal to 1317 nm. The macro bend loss may be at least one of, 0.08 dB/turn at the bend radius of 5 milli meter (mm) and the wavelength of 1550 nm, 0.22 dB/turn at the bend radius of 5 mm and the wavelength of 1625 nm, 0.02 dB/turn at the bend radius of 7.5 mm and the wavelength of 1550 nm, and 0.05 dB/turn at the bend radius of 7.5 mm and the wavelength of 1625 nm. The optical fiber 100 may have a leakage loss of 0.0000002 dB/Km at the wavelength of 1550 nm when the diameter of the optical fiber 100 is equal to 125 $\mu$m. The first relative refractive index '$\Delta$1' may be equal to 0.42, the first radial distance 'R1' may be equal to 4 $\mu$m, the peak shaping parameter " may be equal to 3, the second relative refractive index '$\Delta$2' may be equal to 0, the difference between the second radial distance and the first radial distance (R2-R1) may be equal to 6 $\mu$m, the third relative refractive index '$\Delta$3' may be equal to -0.28, the third radial distance R3 may be equal to 18 $\mu$m, the fourth relative refractive index '$\Delta$4' may be equal to 0, the fourth radial distance R4 may be equal to 58 $\mu$m, the fifth relative refractive index '$\Delta$5' may be equal

to -0.3, the fifth radial distance R5 may be equal to 62.5 $\mu$m.

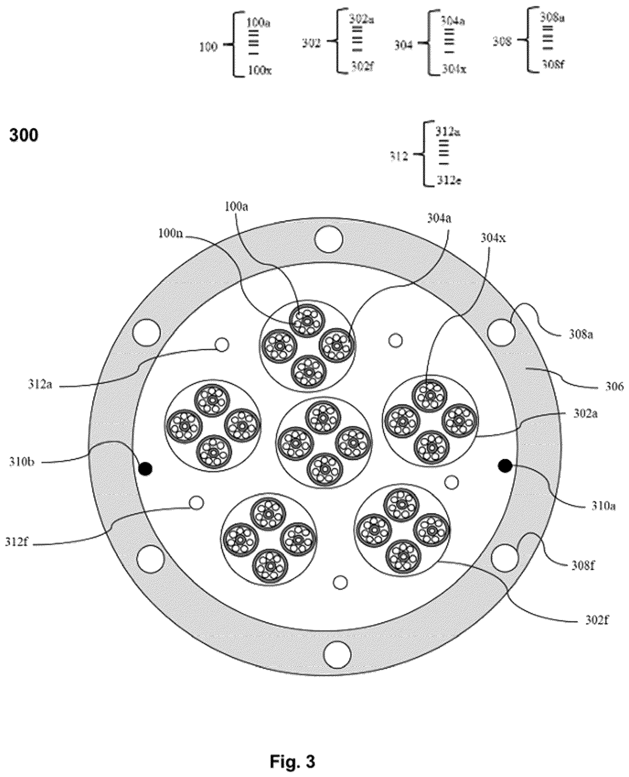

Fig. 3 is a pictorial snapshot illustrating an optical fiber cable manufactured from the optical fiber in accordance with an embodiment of the present disclosure. In particular, the optical fiber cable 300 may be a ribbon fiber cable and/or an intermittent bonded ribbon (IBR) fiber cable. The attenuation of the optical fiber cable 300 may be less than 0.25 dB/km at the wavelength 1310 nm and less than 0.4 dB/km at the wavelength of 1550 nm.

The optical fiber 300 may have a plurality of buffer tubes 302. Although FIG. 3 illustrates that the plurality of buffer tubes 302 has six buffer tubes (i.e., first through sixth buffer tube 302a-302f), it will be apparent to a person skilled in the art that the plurality of buffer tubes 302 may have any number of buffer tubes, without deviating from the scope of the present disclosure. In such a scenario, each buffer tube of the plurality of buffer tubes 302 may be structurally and functionally similar to the first through sixth buffer tubes 302a-302f as described herein.

In accordance with yet another embodiment of the present disclosure, the plurality of buffer tubes 302 may have a plurality of optical fiber ribbons 304 (hereinafter interchangeably referred to and designated as "plurality of IBRs 304"). The plurality of buffer tubes 302 has twenty four IBRS (i.e., first through twenty fourth IBR 304a-304x), it will be apparent to a person skilled in the art that the plurality of buffer tubes 302 may have any number of IBRs, without deviating from the scope of the present disclosure. In such a scenario, each IBR of the plurality of IBRs 304 may be structurally and functionally similar to the first through twenty fourth IBR 304a-304x as described herein. Further each buffer tube of the plurality of buffer tubes 302 has four IBRS (for example the first buffer tube 302a is shown to have the first through fourth IBR 304a-302d), it will be apparent to a person skilled in the art that the scope of the present disclosure is not limited to it. In various other aspects, each buffer tube of the plurality of buffer tubes 302 may have any number of IBRs, without deviating from the scope of the present disclosure. In such a scenario, each IBR of each IBR of the plurality of IBRs 304 may be structurally and functionally similar to the first through twenty fourth IBR 304a-304x as described herein.

In accordance with yet another embodiment of the present disclosure, each IBR 302 may have a plurality of optical fibers 100. Each optical fiber of the plurality of optical fibers 100 may have one or more structural and functional properties same as the optical fiber 100. Further, each optical fiber of the plurality of optical fibers 100 may be the same as the optical fiber 100.

In accordance with yet another embodiment of the present disclosure, each optical fiber of the plurality of optical fibers 100 (hereinafter interchangeably referred to and designated as "the optical fiber 100") may have the core 102 extending along the central axis 101 of the optical fiber 100, and the cladding 104 that may surround the core 102. The core 102 may be doped with Germanium (Ge).

In accordance with yet another embodiment of the present disclosure, the cladding may have the peripheral cladding layer 104d defined by the predefined peripheral thickness, and the fifth refractive index 'n5'. The fifth refractive index 'n5' may be less than a refractive index of pure silica. In particular the peripheral cladding layer 104d may have a peripheral thickness such that the predefined peripheral thickness of the peripheral cladding layer 104d may be at least 4 micrometers ($\mu$m). In some aspects of the present disclosure, the maximum concentration of at least one down dopant in the peripheral cladding layer 104d may be less than or equal to 7 atomic percent (at %).

In accordance with yet another embodiment of the present disclosure, the cladding 104 may further have the inner cladding 104b and the mid-cladding 104c. The inner cladding 104b may have the third refractive index 'n3' less than the refractive index of pure silica. The mid-cladding 104c may separate the inner cladding 104b and the peripheral cladding layer 104d. The mid-cladding 104c may have the fourth refractive index 'n4' that may be equal to the refractive index of pure silica.

In accordance with yet another embodiment of the present disclosure, the cladding 104 may be the intermediate cladding 104a surrounding the core 102. The intermediate cladding 104a may be un-doped.

In accordance with yet another embodiment of the present disclosure, the cladding 104 may have at least one region having the relative refractive index less than the relative refractive index of pure silica. Further, the cladding 104 may have at least one region having the relative refractive index equal to the relative refractive index of pure silica.

In accordance with yet another embodiment of the present disclosure, the optical fiber cable 300 may further have a sheath 306 surrounding the plurality of buffer tubes 302. In particular, the sheath 306 may be adapted to act as an outermost covering for the optical fiber cable 400 such that the sheath 306 facilitates in reduction of abrasion and to provide the optical fiber cable 100 with extra protection against external mechanical effects such as crushing, and the like. In particular, the sheath 306 may be made up of a material such as, but not limited to, a synthetic plastic material, a natural plastic material, and the like. Aspects of the present disclosure are intended to include and/or otherwise cover any type of material for the sheath 306, known to a person of ordinary skill in the art, without deviating from the scope of the present disclosure.

In accordance with yet another embodiment of the present disclosure, the sheath 306 may have a plurality of strength members 308 partially or completely embedded in the sheath 306. In particular, the plurality of strength members 308 may be adapted to provide strength to the optical fiber cable 300 required during an installation process of the optical fiber cable 300. Further, the strength members 308 may be adapted to provide the majority of structural strength and support to the optical fiber cable 300. Furthermore, the strength members 308 may enhance the tensile strength of the optical fiber cable 300, which is highly desirable during the installation process. Although FIG. 3 illustrates that the plurality of strength members 308 has six strength members (i.e., first through sixth strength members 308a-308f), it will be apparent to a person skilled in the art that the plurality of strength members 308 may have any number of strength members, without deviating from the scope of the present disclosure. In such a scenario, each strength member of the plurality of strength members 308 may be structurally and functionally similar to the first through sixth strength members 308a-308f as described herein.

In accordance with yet another embodiment of the present disclosure, the optical fiber cable 300 may have one or more ripcords 310 to facilitate ripping, tearing, or opening up of the optical fiber cable 300. In particular, one or more ripcords 310 may facilitate the ripping, tearing, or opening up of the optical fiber cable 300 to access the plurality of strength members 308 from the sheath 306. Although FIG. 3 illustrates that the one or more ripcords 310 has two ripcords (i.e., first and second ripcords shown as 310a and 310b, respectively), it will be apparent to a person skilled in the art that one or more ripcords 310 may have any number of ripcords, without deviating from the scope of the present disclosure. In such a scenario, each ripcord of the one or more ripcords 310 may be structurally and functionally similar to the first and second ripcords 310a, 310b as described herein.

In accordance with yet another embodiment of the present disclosure, the optical fiber cable 300 may have a plurality of water swellable yarns 312 to provide water resistance to the plurality of optical fibers 100 inside the optical fiber cable 300 by restricting penetration of water inside the optical fiber cable 300. Although FIG. 3 illustrates that the plurality WSYs 312 has five WSYs (i.e., first through fifth WSYs 312a-312e), it will be apparent to a person skilled in the art that, the plurality WSYs 312 may have any number of WSYs, without deviating from the scope of the present disclosure. In such a scenario, each WSY of the plurality WSYs 312 may be structurally and functionally similar to the first through fifth WSY 312a-312e as described herein.

In accordance with yet another embodiment of the present disclosure, the optical fiber 100 provides a reduced diameter in a range of 60 $\mu$m to 100 $\mu$m. In particular, the reduced diameter optical fiber is used in intermittently bonded ribbon (IBR) cable (i.e., the optical fiber cable 300) which significantly improves the packing density of the optical fiber cable 300. Further the additional strength achieved because of the down doped peripheral cladding layer 104d of the optical fiber 100, improves the overall strength of each ribbon of the plurality of optical fiber ribbons 304, and subsequently a strength of the optical fiber cable 300.

In the case of single-mode fibers (SMF), the peripheral cladding layer 104d plays a crucial role in controlling micro bend losses when reducing the cladding diameter from 125 microns to 60 microns. The primary objective is to reduce leakage loss by optimizing the width and depth of the peripheral cladding layer 104d. Additionally, the peripheral cladding layer 104d provides critical strength to the fiber, especially important for low-clad diameter fibers. Increasing the strength of the fiber due to peripheral cladding layer 104d is vital in the optical fiber cable manufacturing process of optical fibers with low cladding diameter. The peripheral cladding layer 104d is doped with elements such as Fluorine or Titanium, creating compressive stress on a surface of the optical fiber 100, aiding in achieving a desired strength. In some aspects of the present disclosure, the optical fiber 100 may have a micro bend loss less than or equal to 0.5 dB/Km.

In accordance with yet another embodiment of the present disclosure, an optical fiber 100 comprising a core 102 that extends along a central axis 101 of the optical fiber 100 and a cladding 104 that surrounds the core 102 and comprising a peripheral cladding layer (104d), where the peripheral cladding layer 104d is defined by a predefined peripheral thickness, and a fifth refractive index (n5). The fifth refractive index (n5) is less than a refractive index of pure silica. Further, the peripheral cladding layer 104d has a fifth relative refractive index ($\Delta$5) such that a numerical value of the fifth relative refractive index ($\Delta$5) at an outermost end 105 of the peripheral cladding layer 104d is less than or equal to a minimum value ($\Delta 5_{min}$) of the fifth relative refractive index ($\Delta$5).

In accordance with yet another embodiment of the present disclosure, the predefined peripheral thickness of the peripheral cladding layer 104d is at least 4 micro meters ($\mu$m).

In accordance with yet another embodiment of the present disclosure, the optical fiber 100 has leakage loss less than or equal to 0.003 decibel per kilometer (dB/Km) at a wavelength 1550 nano meter (nm).

In accordance with yet another embodiment of the present disclosure, the cladding 104 further comprising an inner cladding 104b having a third relative refractive index ($\Delta$3), where a numerical value of the third relative refractive index ($\Delta$3) is less than a relative refractive index of pure silica and a mid-cladding 104c separating the inner cladding 104b and the peripheral cladding layer 104d.

In accordance with yet another embodiment of the present disclosure, the cladding 104 further comprises an intermediate cladding 104a surrounding the core 102. And, the intermediate cladding (104a) is un-doped.

In accordance with yet another embodiment of the present disclosure, the peripheral cladding layer with a predefined thickness and a fifth refractive index less than pure silica. The leakage loss of $\leq$0.003 dB/km at a wavelength of 1550 nm, surpassing the shortcomings of prior art and ITU-T G.657.A2 compliant optical fibers.

The peripheral cladding layer, with its specific thickness and refractive index, plays a pivotal role in minimizing leakage losses. The design parameters, such as the peripheral thickness, relative refractive index, and the configuration of inner and intermediate claddings, work synergistically to achieve the desired optical properties and reduced attenuation.

The integration of the core, inner cladding, intermediate cladding, and the crucial peripheral cladding layer. The predefined thickness and lower refractive index of the peripheral cladding minimize leakage losses, while the overall configuration optimizes the MFD, ensuring a balance between reduced diameter, increased glass strength, and ultra-low bend losses.

In accordance with yet another embodiment of the present disclosure, the optical fiber's efficacy has its application in optical fiber cables, where reduced attenuation and improved macro-bend losses enhance signal transmission quality. The adaptability to optical fiber ribbons further demonstrates its versatility in real-world implementations. Because of the low RI peripheral cladding layer, the overall strength of the optical fiber can be maintained in the optical fiber having reduced glass diameter.

In accordance with yet another embodiment of the present disclosure, the optical fiber cover a broad range, addressing key parameters like Mode Field Diameter (MFD), cable cut-off wavelength, Co-efficient of Thermal Expansion (CTE), and attenuation. The proposed optical fiber's application extends to optical fiber cables and ribbons where reduced diameter optical fiber with higher glass strength is a key requirement nowadays, showcasing its versatility across various communication scenarios.

Advantageously, the optical fiber has improved glass strength, reduced macro-bend losses, and an optimized MFD, ensuring enhanced optical properties crucial for high-speed communication.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber (100) **characterized in that**:

   a core (102) that extends along a central axis (101) of the optical fiber (100); and
   a cladding (104) that surrounds the core (102), and comprising a peripheral cladding layer (104d), wherein the peripheral cladding layer (104d) is defined by a predefined peripheral thickness, and a fifth refractive index (n5), wherein the fifth refractive index (n5) is less than a refractive index of pure silica;
   wherein, a leakage loss of the optical fiber (100) is less than or equal to 0.003 decibel per kilometer (dB/Km) at a wavelength 1550 nano meter (nm).

2. The optical fiber (100) of claim 1, wherein a numerical value of the predefined peripheral thickness of the peripheral cladding layer (104d) is at least 4 micro meters ($\mu$m).

3. The optical fiber (100) of claim 1, wherein the peripheral cladding layer (104d) has a fifth relative refractive index ($\Delta5$) such that a numerical value of the fifth relative refractive index ($\Delta5$) at an outermost end (105) of the peripheral cladding layer (104d) is less than or equal to a minimum value ($\Delta5_{min}$) of the fifth relative refractive index ($\Delta5$).

4. The optical fiber (100) of claim 1, wherein the cladding (104) further comprising:

   an inner cladding (104b) having a third relative refractive index ($\Delta3$), where a numerical value of the third relative refractive index ($\Delta3$) is less than a relative refractive index of pure silica; and
   a mid-cladding (104c) separating the inner cladding (104b) and the peripheral cladding layer (104d).

5. The optical fiber (100) of claim 1, wherein the cladding (104) further comprising an intermediate cladding (104a) surrounding the core (102), where the intermediate cladding (104a) is un-doped.

6. The optical fiber (100) of claim 1, wherein a concentration profile of at least one down dopant is maximum between an outer boundary (104ba) of the core (102) and an outer boundary (104bb) of the inner cladding (104b).

7. The optical fiber (100) of claim 3, wherein an absolute difference in the fifth relative refractive index ($\Delta5$) and the relative refractive index of pure silica is less than or equal to 0.3%.

8. The optical fiber (100) of claim 1, wherein the cladding (104) comprising at least one region of a predefined thickness where relative refractive index is equal to the relative refractive index of pure silica.

9. The optical fiber (100) of claim 1, wherein

   (i) a Mode Field Diameter (MFD) of the optical fiber (100) is in a range of 8.2 micro meter ($\mu$m) to 9 $\mu$m at a wavelength of 1550 nm,
   (ii) a cable cut-off wavelength of the optical fiber (100) is less than or equal to 1260 nano meter (nm),
   (iii) a Co-efficient of Thermal Expansion (CTE) of the optical fiber (100) is in a range of $6 \times 10^{-7}$ to $1 \times 10^{-7}$ per Celsius ($C^{-1}$), and
   (iv) an attenuation of the optical fiber (100) is less than 0.35 decibel/kilometer (dB/KM) at a wavelength of 1310 nm and 0.25 dB/KM at the wavelength of 1550 nm.

10. The optical fiber (100) of claim 1, wherein a macrobend loss of the optical fiber (100) is less than or equal to at least one of,

    (i) 0.15 dB/turn at a bend radius of 5 milli meter (mm) and a wavelength of 1550 nm,
    (ii) 0.45 dB/turn at a bend radius of 5 mm and a wavelength of 1625 nm,
    (iii) 0.2 dB/turn at a bend radius of 7.5 mm and a wavelength of 1550 nm, and
    (iv) 0.5 dB/turn at a bend radius of 7.5 mm and a wavelength of 1625 nm.

11. The optical fiber (100) of claim 14, wherein the diameter of the optical fiber (100) is less than 125 $\mu$m such that a maximum concentration of at least one down dopant in the peripheral cladding layer (104d) is less than or equal to 7 atomic percent (at %).

12. The optical fiber (100) of claim 1, wherein the optical fiber (100) is coated by a primary coating and a secondary coating such that a ratio of a thickness of the primary coating to a thickness of the secondary coating is greater than 0.14.

13. The optical fiber (100) of claim 1, wherein the optical fiber (100) is for use in an optical fiber cable (300).

14. The optical fiber (100) of claim 1,wherein the optical fiber (100) is used for manufacturing an optical fiber ribbon (304) with at least one pair of adjacent optical fibers is fully bonded along the length and at least one pair of adjacent optical fibers is intermittently bonded along the length.

15. The optical fiber cable (300) of claim 16, wherein an attenuation of the optical fiber cable (300) is (i) less than 0.4 dB/km at a wavelength of 1310 nm, and (ii) less than 0.25 dB/km at the wavelength of 1550 nm.

100

104 {
104d
104c
104b
104a

104bb
104ba

105

R2
R1
n1
R3
R4
n2
n3
R5
n4
n5

102

101

FIG. 1

FIG. 2A

**FIG. 2B**

Fig. 3

Europäisches
Patentamt

European
Patent Office

Office européen
des brevets

## EUROPEAN SEARCH REPORT

Application Number

EP 24 18 3565

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/294029 A1 (BICKHAM SCOTT ROBERTSON [US] ET AL) 23 September 2021 (2021-09-23) * paragraphs [0029], [0053] - [0054], [0058], [0079] - [0081], [0084], [0097], [0117], [0120]; figures 4,5,6E,7; table 5 * | 1-4,7, 9-15 | INV. G02B6/036 |
| X | CN 102 043 197 A (YANGTZE OPTICAL FIBRE & CABLE) 4 May 2011 (2011-05-04) * paragraph [0021]; figure 1 * | 1-10 | |
| X | US 2008/317418 A1 (TANIGUCHI YUKI [JP] ET AL) 25 December 2008 (2008-12-25) * paragraphs [0053] - [0054], [0088] - [0089], [0091]; figures 17-19 * | 1-7,9-11 | |
| X | US 2011/205349 A1 (LI MING-JUN [US]) 25 August 2011 (2011-08-25) * paragraphs [0032], [0034] - [0035]; figures 1A-1B * | 1-4,9-11 | |
| X | EP 0 283 748 A1 (SUMITOMO ELECTRIC INDUSTRIES [JP]) 28 September 1988 (1988-09-28) * column 3, line 54 - column 4, line 26 * * column 5, lines 26-28 * * figure 3B * | 1,3,4,6, 9,10,15 | TECHNICAL FIELDS SEARCHED (IPC) G02B |
| X | JP 2001 240424 A (SUMITOMO ELECTRIC INDUSTRIES) 4 September 2001 (2001-09-04) * paragraphs [0021], [0043]; figure 4 * | 1,3,4,6, 7,9,10 | |

The present search report has been drawn up for all claims

| Place of search | Date of completion of the search | Examiner |
|---|---|---|
| The Hague | 23 October 2024 | Pantelakis, P |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 3565

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2024

| Patent document cited in search report | | | Publication date | Patent family member(s) | | | Publication date |
|---|---|---|---|---|---|---|---|
| US 2021294029 | A1 | | 23-09-2021 | CN | 115552298 | A | 30-12-2022 |
| | | | | EP | 3882676 | A1 | 22-09-2021 |
| | | | | JP | 2023518942 | A | 09-05-2023 |
| | | | | US | 2021294029 | A1 | 23-09-2021 |
| | | | | US | 2024045138 | A1 | 08-02-2024 |
| | | | | WO | 2021188289 | A1 | 23-09-2021 |
| CN 102043197 | A | | 04-05-2011 | CN | 102043197 | A | 04-05-2011 |
| | | | | WO | 2012100581 | A1 | 02-08-2012 |
| US 2008317418 | A1 | | 25-12-2008 | EP | 1988411 | A1 | 05-11-2008 |
| | | | | JP | 4460065 | B2 | 12-05-2010 |
| | | | | JP | 2007225734 | A | 06-09-2007 |
| | | | | US | 2008317418 | A1 | 25-12-2008 |
| | | | | US | 2009257724 | A1 | 15-10-2009 |
| | | | | WO | 2007097337 | A1 | 30-08-2007 |
| US 2011205349 | A1 | | 25-08-2011 | CN | 102782540 | A | 14-11-2012 |
| | | | | EP | 2539753 | A1 | 02-01-2013 |
| | | | | JP | 5762444 | B2 | 12-08-2015 |
| | | | | JP | 2013520712 | A | 06-06-2013 |
| | | | | KR | 20130006630 | A | 17-01-2013 |
| | | | | US | 2011205349 | A1 | 25-08-2011 |
| | | | | WO | 2011106335 | A1 | 01-09-2011 |
| EP 0283748 | A1 | | 28-09-1988 | AU | 601263 | B2 | 06-09-1990 |
| | | | | EP | 0283748 | A1 | 28-09-1988 |
| | | | | JP | S63208003 | A | 29-08-1988 |
| JP 2001240424 | A | | 04-09-2001 | NONE | | | |

EPO FORM P0459

For more details about this annex : see Official Journal of the European Patent Office, No. 12/82

**EP 4 485 022 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202311043986
- US 9802858 B2
- US 8472770 B2